# EUROPEAN PATENT APPLICATION

(11) **EP 4 389 399 A1**
(43) Date of publication of application: **26.06.2024**
(21) Application number: 22940967.7
(22) Date of filing: 14.12.2022
(51) Int. Cl.: B29C 64/209, B05B 1/04, B29C 64/321, B33Y 30/00, B33Y 40/00, B33Y 70/00

(54) **SLIT NOZZLE FOR LARGE-AREA PRINTING**

(30) Priority: 11.11.2022 KR 20220150063
(71) Applicant: T&R Biofab Co., Ltd., Siheung-si, Gyeonggi-do 15073 (KR)
(72) Inventor: KIM, In Ho, Seongnam-si, Gyeonggi-do 13487 (KR); LEE, In Gyu, Seongnam-si, Gyeonggi-do 13487 (KR)
(74) Representative: Caspary, Karsten
(86) International application number: PCT/KR2022/020315
(87) International publication number: WO 2024/101527

(57) **Abstract**

The present disclosure relates to a slit nozzle for large-area printing in which printing material is ejected in a line way, in which batch printing of a large area is enabled, so that printing time is shortened and uniformity is improved, characterized in that a slit nozzle for large-area printing comprises: a syringe in which printing material for printing is received; a pair of manifolds connected to the syringe and formed with a chamber for storing and ejecting printing material ejected from the syringe in the form of a line; and a seamplate positioned between the pair of manifolds to ensure that printing material ejected from the syringe uniformly fills the chamber and determines the ejection thickness of the ejected printing material.

## Description

### [Technical Field]

The present disclosure relates to a slit nozzle for large-area printing, and more particularly to a slit nozzle for large-area printing through which a printing material is ejected in a line way and in which batch printing of a large area is enabled so that a printing time is shortened and uniformity is improved.

### [Description of the Related Art]

Three-dimensional (3D) printing is a type of additive manufacturing in which the desired shape is created by stacking materials layer by layer based on a three-dimensional digital data through scanning or modeling, and in a broader sense, 3D printing technology also refers to additive manufacturing as a whole. It is said that the 3D printing process may reduce the energy required for production by about 50% and the material by about 90% compared to other existing processing processes.

There are nine main types of 3D printing methods, depending on the additive process, with material extrusion method being the most popular for home use because it has the simplest hardware configuration. 3D printers with material extrusion include fused filament fabrication (FFF) and materials extrusion (ME) 3D printers. In general, ME 3D printers are used to create three-dimensional structures by ejecting material from the upper part of a movable molding plate composed of a printer head movable in the XY axis and movable in the Z direction and the material is mainly filaments having a circular cross-section of 1.25 millimeter (mm) to 3 mm in diameter made of thermoplastic resin, and as the supplied filament melts, it is sprayed through a nozzle arranged at the lower part of the printer head and stacked layer by layer.

However, since 3D printers in the related art use nozzles with a circular cross-section to stack structures, nozzles with a certain size circular diameter are mostly manufactured with a very small size diameter to produce precise shapes, so these nozzles are easy to produce precise structures, but when producing large-area structures, the material is ejected in the form of dots, and the production time is long, which reduces work efficiency.

### [References in related art]

(Patent reference 1) Korean Patent Application Publication No. 10-2017-0047550

### [Disclosure of the Invention]

### [Technical Goals]

Therefore, the present disclosure is designed to solve the above matters, and the purpose is to provide a slit nozzle for large-area printing that may eject printing material in a line, which may shorten printing time and improve uniformity when printing a large area.

### [Technical Solutions]

A slit nozzle for large-area printing according to an example embodiment of the present disclosure for achieving the above matters may include: a syringe in which printing material for printing is received; a pair of manifolds connected to the syringe and formed with a chamber for storing and ejecting printing material ejected from the syringe in the form of a line; and a seamplate positioned between the pair of manifolds to ensure that printing material ejected from the syringe uniformly fills the chamber and determines the ejection thickness of the ejected printing material.

The chamber may be formed in each of a pair of manifolds, or may be formed in only one manifold.

The at least one or more chambers may be formed in the manifold.

An upper part of the manifold is formed with a syringe engagement part to which the syringe may be connected, and an interior of said syringe engagement part may be in communication with a chamber to which printing material received in the syringe may be ejected into the chamber.

The chamber may be formed to be longer and sloped on both sides to allow the printing material received in the syringe to flow through the syringe engagement part in equal amounts and be evenly ejected in a line way.

The syringe engagement part may be plural so that a plurality of syringes may be connected.

The seamplate is formed with an adhesion plate which may be pressed against the side of the syringe engagement part to which the syringe is connected at the top so that the material may pass through the syringe engagement part and be smoothly introduced into the chamber, and the inner line may be in line with the top line of the chamber.

The seamplate is formed with the same thickness as the set ejection thickness of the printing material, and the seamplate that matches the ejection thickness of the printing material may be replaced and used.

The pair of manifolds may be removably connected by being pressed together with the seamplate positioned between them and bolted and nutted through the insertion groove.

The seamplate may be formed with a mounting groove into which a bolt for coupling the pair of manifolds is inserted.

The printing material may include a natural polymer.

### [Effects]

According to a slit nozzle for large-area printing according to the disclosure, as described above, at least one chamber is formed in the form of a straight line inside a pair of manifolds to which a syringe receiving printing material is connected and from which material is ejected for printing, and a seamplate is provided between the pair of manifolds, so that the printing material is uniformly filled into the chamber by the seamplate, and the printing material is discharged in the form of a line through the straight-line shaped chamber, so that large-area batch printing is possible, and the time for large-area printing is shortened and the uniformity is improved, so that the efficiency of the work and the quality of the structure may be improved.

### [Brief Description of the Drawings]

FIG 1 is a perspective view of a slit nozzle for large-area printing according to the present disclosure.
FIG. 2 is an exploded perspective view of a slit nozzle for large-area printing according to the present disclosure.
FIG. 3 is a cutaway view of a slit nozzle for large-area printing according to the present disclosure.
FIG. 4 is a schematic illustration of a printing material ejection state of a slit nozzle for large-area printing according to the present disclosure.
FIG. 5 is a front view of one example of a manifold in which multiple syringes of a slit nozzle for large-area printing according to the present disclosure are connected.
FIG. 6 is a front view of an example manifold of a slit nozzle for large-area printing according to the present disclosure.

### [Detailed Description for Carrying Out the Invention]

The present disclosure is subject to various modifications and may have many example embodiments, certain of which are illustrated in the drawings and further described in the detailed description. However, this is not intended to limit the disclosure to any particular example embodiment and should be understood to include all modifications, equivalents, or substitutions that are within the spirit and scope of the disclosure.

In the drawings, example embodiments of the disclosure are not limited to the particular forms shown and are exaggerated for clarity. Certain terms are used herein for the purpose of describing the disclosure and are not intended to limit the meaning or to limit the scope of the claims of the disclosure.

As used herein, the phrase "and/or" is used to mean including at least one of the components listed before or after. In addition, the expression "connected to/combined with" is used to include being directly connected to another component or being indirectly connected through another component. In this specification, the singular includes the plural unless the context otherwise mentions. In addition, components, steps, operations, and elements referred to as "including" or "comprising" as used in the specification imply the presence or addition of one or more other components, steps, operations, and elements.

In the description of the example embodiments, references to each layer, region, pattern, or structure being formed "on" or "under" the substrate, respective sides, regions, pads, or patterns include both being formed directly or by interposing other layers. The reference to "on"/"over" or "under"/"below" each layer is described with reference to the drawings.

Hereinafter, example embodiments of the present disclosure will be described in detail with reference to the accompanying drawings.

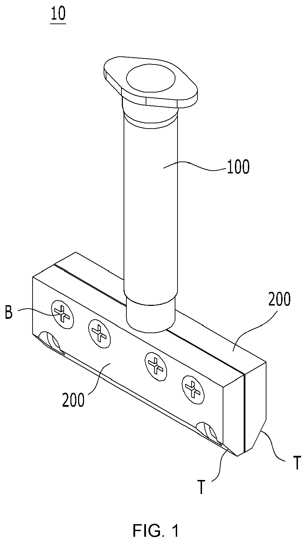

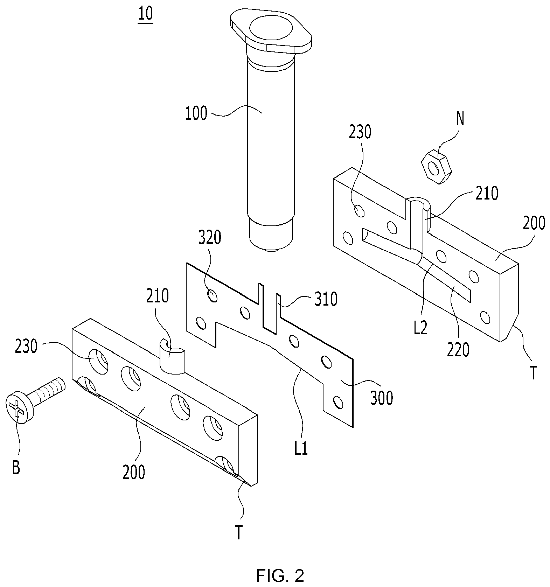

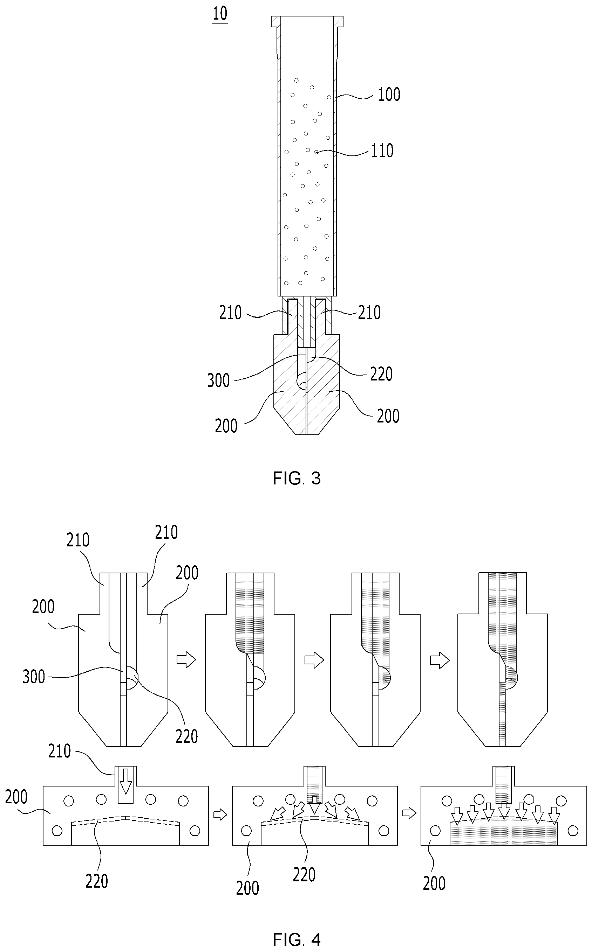

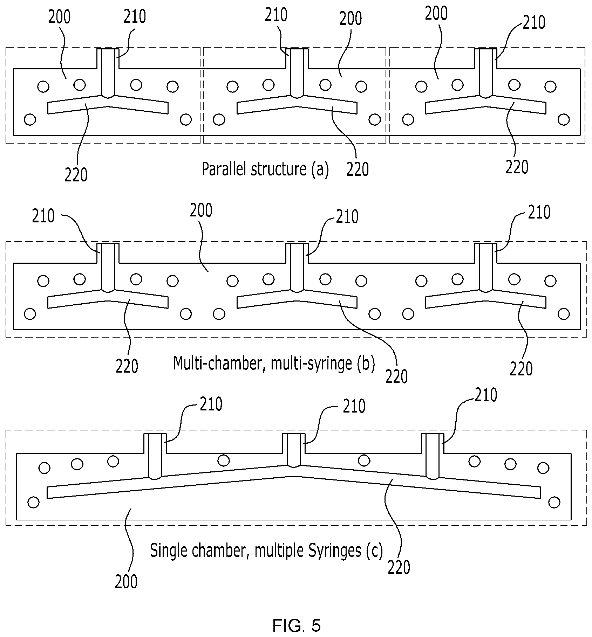

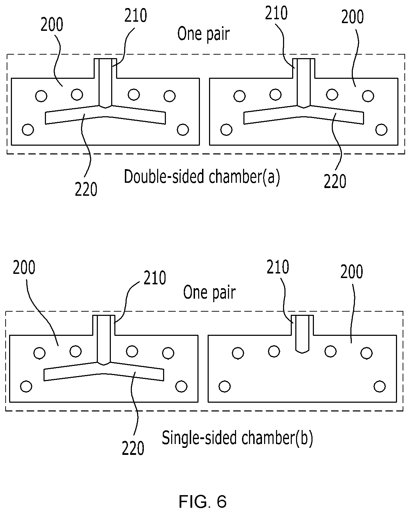

FIG 1 is a perspective view of a slit nozzle for large-area printing according to the present disclosure; FIG. 2 is an exploded perspective view of a slit nozzle for large-area printing according to the present disclosure; FIG. 3 is a cutaway view of a slit nozzle for large-area printing according to the present disclosure; FIG. 4 is a schematic illustration of a printing material ejection state of a slit nozzle for large-area printing according to the present disclosure; FIG. 5 is a front view of one example of a manifold in which multiple syringes of a slit nozzle for large-area printing according to the present disclosure are connected; and FIG. 6 is a front view of an example manifold of a slit nozzle for large-area printing according to the present disclosure.

As shown in FIGS. 1 to 3, the slit nozzle 10 for large-area printing according to the present disclosure may be moved by the drive part and the control part of the printer to eject the printing material 110 received in the syringe 100 so that printing may be accomplished.

A slit nozzle 10 for large-area printing according to the present disclosure may include a syringe 100, a manifold 200, and a seamplate 300.

The syringe 100 receives the printing material 110 for printing and flows the printing material 110 to the manifold 200 to eject the printing material 110 through the manifold 200 to achieve printing.

In this case, the printing material 110 received in the syringe 100 may include a natural polymer, in which the natural polymer may include one or more selected from the group consisting of 3D printable materials such as viscous collagen, tissue-derived decellularized extracellular matrix (dECM), and the like. Further, the natural polymer may include one or more selected from the group consisting of a solution type, a fibrillar type, a lyophilized type, and the like. Meanwhile, it is preferred that the printing material 110 is not limited to a natural polymer, but may be used as any other material.

The manifold 200 is connected to the syringe 100, where the printing material 110 is received, and holds the printing material 110 ejected from the syringe 100, which may be ejected in a line to allow printing over a large area. The manifolds 200 may be connected in pairs on either side of the lower end of the syringe 100. The pair of manifolds 200 may be connected in a plurality in parallel, as shown in (a) of FIG. 5.

Furthermore, a syringe engagement part 210 is formed on the upper side of the manifold 200 to connect the syringe 100, and a chamber 220 may be formed on the inner side so that the printing material 110 received in the syringe 100 may be ejected through the syringe engagement part 210.

The syringe couplings 210 may be formed on each of the pair of manifolds. As shown in (b) of FIG. 5, the syringe engagement part 210 may be formed in multiple numbers to suit the quantity of syringes 100 so that multiple syringes 100 may be connected.

The chamber 220 may be formed in communication with the syringe engagement part 210 such that the printing material 110 received in the syringe 100 may flow through the syringe engagement part 210.

The chamber 220 may be formed on a slope on either side of the syringe engagement part 210 so that the printing material 110 received in the syringe 100 may flow through the syringe engagement part 210 in equal amounts and be ejected evenly. Further, the chamber 220 may be formed elongated so that the printing material 110 may be ejected in a line and printed over a large area.

In addition, the chambers 220 may be formed in each of the pair of manifolds 200, as in (a) of FIG. 6, or may be formed in only one manifold 200 of the pair of manifolds 200, as in (b) of FIG. 6. Additionally, when a plurality of syringe engagement part 210 are formed, as in (b) of FIG. 5, a plurality of chambers 220 are also formed in each syringe engagement part 210, or a single chamber 220 may be formed in a plurality of syringe engagement part 210, as in (c) of FIG. 5.

Meanwhile, the pair of manifolds 200 may be removably connected by being pressed against each other and having bolts B and nuts N engaged through insertion grooves 230. The lower outer surface of the manifolds 200 may be formed to be tapered T for smooth printing even when the slit nozzle 10 is tilted vertically or at a certain angle from the printing plane.

The seamplate 300 is provided between the pair of manifolds 200 and allows the printing material 110 fed from the syringe 100 to pass through the syringe engagement part 210 and uniformly fill the chamber 220. In addition, the seamplate 300 may be pressed against a side of the syringe engagement part 210 to which the syringe 100 is connected at the top, so that an adhesion piece 310 may be formed to allow the printing material 110 to pass through the syringe engagement part 210 and be smoothly fed into the chamber 220.

The inner line L1 of the seamplate 300 may be positioned on the same line as the top line L2 of the chamber 220, or may be positioned above or below it, depending on the filling capacity of the printing material 110. That is, when the seamplate 300 is pressed between the pair of manifolds 200, depending on the spacing of the top line L2 of the chamber 220 and the inner line L1 of the seamplate 300, the printing material 110 that has passed through the syringe engagement part 210 part be uniformly and accurately filled into the chamber 220 to the required capacity.

The seamplate 300 may be formed with a thickness equal to a set ejection thickness of the printing material 110. That is, the thickness of the seamplate 300 may determine the printing thickness of the structure. Furthermore, the seamplate 300 may be used by separating the pair of manifolds 200 and replacing the seamplate 300 with a thickness that matches the ejection thickness of the printing material 110.

The seamplate 300 may have a mounting groove 320 into which a bolt B is mounted for joining the pair of manifolds 200.

The operation status of the slit nozzle for large-area printing of the present disclosure with the above structure is as follows.

A seamplate 300 is sandwiched between the pair of manifolds 200 and a syringe 100 is connected to the syringe engagement 210 of the pair of manifolds 200, and printing material 110 received within the syringe 100 may be introduced into the pair of manifolds 200. At this time, the printing material 110 may be filled into the chamber 220 through the syringe engagement part 210.

And, as the printing material 110 is uniformly filled into the chamber 220, it may be uniformly ejected from the outlet of the slit nozzle 10. Since the chamber 220 in which the printing material 110 is filled and ejected is formed in a straight line from left to right, the printing material 110 may be line extruded while transporting the slit nozzle 10 in a certain direction to realize a plane coating effect, which may reduce the printing time for a large area. For example, in a printing process in the related art in which the printing material is ejected in the form of a dot, the printing time is about 208 seconds, but in the slit nozzle 10 of the present disclosure, the printing material 110 is ejected in the form of a line, and the printing process is about 46 seconds, which may be reduced by about 80% compared to the printing process in the related art.

Furthermore, by adjusting the gap of the seamplate 300 (thickness, opening rate of the chamber, and the like), the inner chamber 220 of the manifold 200 may be uniformly filled with the printing material 110 of the natural polymer by creating a tubular resistance within the chamber 220, and the printing material 110 may then be evenly ejected from the outlet of the slit nozzle 10 in accordance with the adjusted gap of the seamplate 300 to improve the uniformity of the printing.

As such, the syringe 100 in which the printing material 110 is received is engaged to a pair of manifolds 200, a chamber 220 is formed inside the manifolds 200 in which the printing material 110 is filled and ejected in a straight line way from left to right, and a seamplate 300 is provided between the pair of manifolds 200, so that the printing material 110, which is fed into the syringe 100, is directly fed from the syringe 100 to the manifolds 200 and is uniformly filled in the chamber 220 by the seamplate 300, making it possible to batch print a large area.

In the above detailed description of the disclosure, only particular example embodiments thereof have been described. However, the disclosure should not be understood to be limited to the special forms mentioned in the detailed description, but rather to include all variations, equivalents and substitutes within the spirit and scope of the disclosure as defined by the appended claims.

In other words, the disclosure is not limited to the specific example embodiments and descriptions set forth above, and various modifications may be made by one having ordinary skill in the art to which the disclosure belongs without departing from the spirit of the disclosure as claimed, and such modifications will fall within the scope of protection of the disclosure.

### [Explanation of symbols].

10: Slit nozzle
100: Syringe
110: Printing material
200: Manifold
210: Syringe engagement part
220: Chamber
230: Insertion groove
300: Seamplate
310: Adhesion piece
320: Mounting groove

## Claims

1. A slit nozzle for large-area printing, comprising:
a syringe in which printing material for printing is received;
a pair of manifolds connected to the syringe and formed with a chamber for storing and ejecting printing material ejected from the syringe in the form of a line; and
a seamplate positioned between the pair of manifolds to ensure that printing material ejected from the syringe uniformly fills the chamber and determines the ejection thickness of the ejected printing material.

2. The slit nozzle for large-area printing of claim 1, **characterized in that**,
the chamber is formed in each of a pair of manifolds, or formed in only one manifold.

3. The slit nozzle for large-area printing of claim 1 or claim 2, **characterized in that**,
at least one or more chambers are formed in the manifold.

4. The slit nozzle for large-area printing of claim 1, **characterized in that**,
an upper part of the manifold is formed with a syringe engagement part to which the syringe is connected, and an interior of the syringe engagement part is in communication with a chamber to which printing material received in the syringe is ejected into the chamber.

5. The slit nozzle for large-area printing of claim 4, **characterized in that**,
the chamber is formed to be longer and sloped on both sides to allow the printing material received in the syringe to flow through the syringe engagement part in equal amounts and be evenly ejected in a line way.

6. The slit nozzle for large-area printing of claim 4, **characterized in that**,
the syringe engagement part is plural so that a plurality of syringes is able to be connected.

7. The slit nozzle for large-area printing of claim 1, **characterized in that**,
the seamplate is formed with an adhesion plate which is pressed against the side of the syringe engagement part to which the syringe is connected at the top so that the material passes through the syringe engagement part and is smoothly introduced into the chamber.

8. The slit nozzle for large-area printing of claim 7, **characterized in that**,
the seamplate ejects printing material evenly by adjusting the thickness and chamber opening rate.

9. The slit nozzle for large-area printing of claim 1 or claim 7, **characterized in that**,
the seamplate is formed with the same thickness as the set ejection thickness of the printing material, and the seamplate that matches the ejection thickness of the printing material is replaced and used.

10. The slit nozzle for large-area printing of claim 1, **characterized in that**,
the pair of manifolds may be removably connected by being pressed together with the seamplate positioned between them and bolted and nutted through the insertion groove.

11. The slit nozzle for large-area printing of claim 10, **characterized in that**,
the seamplate may be formed with a mounting groove into which a bolt for coupling the pair of manifolds is inserted.

12. The slit nozzle for large-area printing of claim 1, **characterized in that**,
the printing material includes a natural polymer.
